# EUROPEAN PATENT SPECIFICATION

(11) **EP 2 299 349 B1**
(45) Date of publication and mention of the grant of the patent: **29.05.2013**
(21) Application number: 10173578.5
(22) Date of filing: 20.08.2010
(51) Int. Cl.: G06F 3/03, G06F 3/042

(54) **Data transfer method and system**
Verfahren und System zur Datenübertragung
Procédé et système de transfert de données

(30) Priority: 20.08.2009 US 544315
(43) Date of publication of application: 23.03.2011
(60) Divisional application: 13165133.3
(73) Proprietor: Samsung Electronics Co., Ltd., Suwon-si, Gyeonggi-do, 443-742 (KR)
(72) Inventor: TOLEDANO, Eyal, Gyeonggi-do 442-742 (KR); BARELI, Reuben, Gyeonggi-do 442-742 (KR); SHIRRON, Dan, Gyeonggi-do 442-742 (KR); HAVIV, Elad, Gyeonggi-do 442-742 (KR)
(74) Representative: Jenkins, Richard Gavin

(56) References cited:
- EP-A2- 2 040 156
- WO-A1-2007/003682
- GB-A- 2 454 482

## Description

### Field of the Invention

The present invention relates to the transfer of data between terminals capable of performing data transmission and reception.

### Background of the Invention

Mobile devices are becoming increasingly integrated in the use their owner makes to replace some of the functions of heavier computer apparatus. As a result, the Abilities of small mobile devices, such as cellular telephones, have been enhanced in recent years such that they are able both to generate data, such as media files, text files, data files and other data, such as location data generated by GPS, as well as to receive and use data and data files generated by other systems. However, the art has so far failed to provide an intuitive and immediate way that enables the transfer of files or data (such as Images, Text, HTML files, URL, etc.) from a PC to a mobile device, and vice versa, in a manner that is efficient and convenient for the user. Currently, for instance, a user wishing to transfer notepad text from a PC to a mobile phone is required to perform several actions such as saving text to file, establishing connection, dragging and dropping a file, finding the file in the phone, opening the file, cutting & pasting, etc.

WO 2007/003682 describes a technique for allowing a user to select and manipulate objects presented on a display, without requiring physical contact with the display, using a device, such as a smart-phone, equipped with a camera.

All the methods and systems available in the prior art suffer from drawbacks inasmuch as they are time-consuming, cumbersome to use and do not provide an intuitive, easy to use, immediate transfer solution, which enables the transfer of files or data from PC to mobile phone and vice versa.

### Summary Of The Invention

Accordingly, the present invention has been made to solve the above-mentioned problems occurring in the prior art, and the present invention provides a method and a system, which enable simple, intuitive and rapid transmission of an object, such as a file or data, between a mobile device and a Personal Computer (PC).

In one aspect, the invention is directed to a data transfer method, including the steps of: identifying an object displayed on a screen of a second terminal by using a camera of a first terminal, to which data is to be transmitted; determining coordinates of the object identified by the first terminal; and transmitting the object displayed on the screen of the second terminal and/or its metadata to the first terminal, wherein the coordinates of the object are determined based on an area on the screen having one or more markers, each marker comprising a preset pattern representing the position of each marker; and wherein the markers are identified by capturing, by the camera, a first image before the markers are placed on the screen, capturing, by the camera, a second image containing the markers, and subtracting the first image from the second image.

In another aspect, the invention is directed to a data transfer system, including: a data object extractor to identify and extract displayed data objects based on an area having a particular pattern preset on a screen of a terminal capable of transmitting and receiving data; an image processor to process images of the screen of the terminal capable of transmitting and receiving data, and to extract location information for objects displayed based on an area having a particular pattern preset on the screen; and an application service processor to receive data objects transmitted over a communication line and to embed the received data objects in the operation of a receiving terminal, wherein the terminal capable of transmitting and receiving data is adapted to transmit or receive data objects to or from another terminal capable of transmitting and receiving data over a communication line, and wherein the image processor is adapted to identify the area having the particular pattern preset on the screen by capturing, by a camera, a first image of the screen before the area having the particular pattern is preset on the screen, capturing, by the camera, a second image containing the area having the particular pattern preset on the screen, and subtracting the first image from the second image.

In a method and a system according to the present invention, it is possible to achieve simple, intuitive and rapid transmission of an object, such as a file or data, between terminals capable of performing data transmission and reception.

### Brief Description Of The Drawings

In the drawings:
Fig. 1 is a schematic illustration of the main blocks of the system of the invention;
Fig. 2 illustrates a technical sequence performed by a system according to one particular exemplary embodiment of the invention;
Fig. 3 shows three different examples of markers used to illustrate one embodiment of the invention;
Figs. 4 - 7 illustrate a specific example of one method according to the invention for identifying in the mobile device the location on a PC screen at which the camera of the mobile device is pointing;
Figs. 8 - 10 illustrate a specific example of one method according to the invention by which a PC extracts an object located at the specified coordinates on its screen, which have been calculated by the mobile device;
Fig. 11 is an example of use in which an image is acquired from a browser;
Fig. 12 is an example of use in which text is acquired from a notepad;
Fig. 13 is an example of use in which details of a meeting are acquired from a calendar;
Fig. 14 is an example of use in which an image is "pushed" from a mobile device to a PC;
Fig. 15 is an example of use in which a mobile device interacts with two PCs;
Fig. 16 (A and B) illustrates the operation of the invention when taking a picture from the Internet Explorer browser and transferring it to a mobile phone;
Fig. 17 (A and B) illustrates the operation of the invention when transferring selected text from a PC notepad to cellular phone;
Fig. 18 (A and B) illustrates the operation of the invention when transferring an MP3 music file from the Windows file Explorer to a cellular phone;
Fig. 19 (A and B) illustrates the operation of the invention when transferring a picture from a cellular phone by pushing it to a PC File Explorer;
Fig. 20 (A and B) illustrates the operation of the invention when transferring a picture from a cellular phone by pushing it to a PC to become an attachment of an Outlook outgoing e-mail message; and
Fig. 21 (A and B) illustrates the direct installation of a phone software in the cellular phone, from a web application store.

### Detailed Description of the Invention

Throughout this description, unless otherwise specified, the terms "mobile device" and "mobile phone" are used interchangeably to refer to communication devices that, in addition to their communication capabilities, are also equipped with computing capabilities, which allows them to generate data that can be used by a PC, or use data generated by a different system, such as a PC, or both.

Furthermore, for the purposes of this description the terms "PC", "personal computer", "computing apparatus", "desktop computer" or the like, are used to indicate computing equipment and systems in the broadest sense, and include laptop computers, fixed or mobile terminals, screens equipped with computing capabilities, and any data handling equipment equipped with a CPU and communication capabilities.

In addition, as a presumption for the following description of the present invention, the first terminal described below refers to a receiver-side terminal for receiving data, and the second terminal described below refers to a transmitter- side terminal.

The invention provides an immediate, user friendly solution for the transfer of data from a PC or other mobile device to a mobile phone and vice versa. The system of the invention, when operating to transfer data from a PC to a mobile phone, operates as follows:
a) The user points the mobile phone's camera at the object on the PC screen, which he wants to use on the mobile phone;
b) The user presses a key (for example) on the mobile phone that activates a program, which identifies what the camera is looking at;
c) The PC transfers the identified object and or its metadata to the mobile phone using the appropriate transfer channel (Bluetooth, WiFi, USB cable, cellular network or other).
d) The mobile phone identifies the object type and stores/displays/run/etc it using the appropriate application.

In one embodiment, the invention exploits the ability of the second terminal (PC) to "identify" where the user aims the mobile phone's camera, using a marker-based solution (image processing). In such a solution, the second terminal (PC) displays a predefined image based on an area having a particular pattern (i.e. marker) on the screen and the camera of the first terminal (mobile device) captures it. The marker is chosen in such a way that it is easy to use known image processing algorithms (such as barcode reading) to understand the location the phone's camera captured. Alternative ways for the second terminal (PC) to understand the coordinates of the object at which the camera is aiming can be provided by the skilled person, for instance by sending the phone's camera view image to the pc and using image processing algorithms such as SURF algorithm [Herbert Bay, Andreas Ess, Tinne Tuytelaars, Luc Van Gool, "SURF: Speeded Up Robust Features", Computer Vision and Image Understanding (CVIU), Vol. 110, No. 3, pp. 346--359] or other, to register it in the desktop image or vice versa. Another alternative is using a camera coupled with the second terminal (PC) to identify the movements of the first terminal (mobile device), or by using three-dimensional location information of the first terminal (mobile device) relative to the second terminal (PC) screen.

In another embodiment of the invention the pointing coordinates are calculated in real time. In such case there is a benefit to displaying augmented metadata on the objects in mobile preview (for example a file size or highlight around the chosen object). When the user chooses to interact with the object he will initiate the process (for example by pressing a key or touch screen).

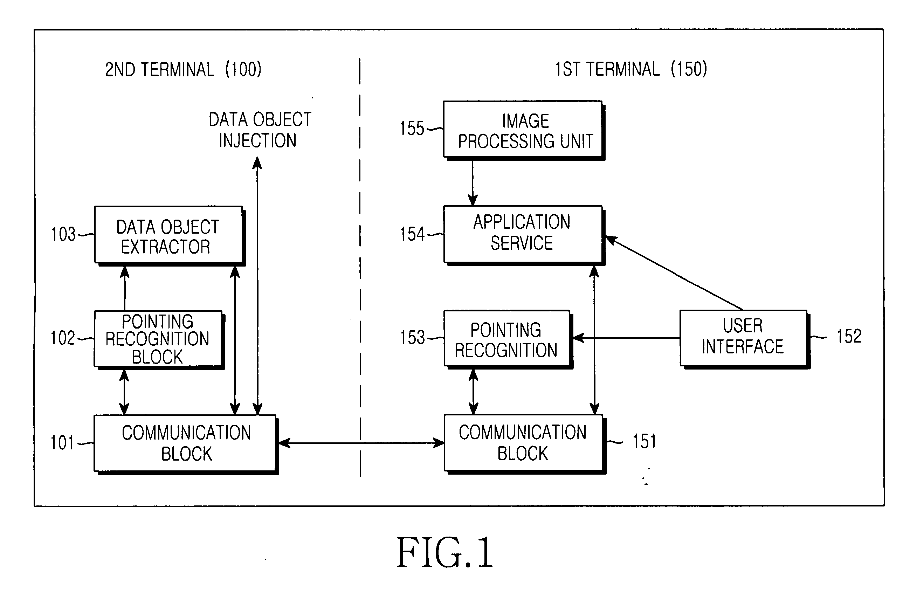

Fig. 1 schematically shows the main blocks of a system according to the invention. In this system a first terminal (mobile phone) 150 is in communication with a second terminal (PC) 100 via any suitable communication channel, including but not limited to Bluetooth, WiFi, USB cable or cellular network. The second terminal (PC) 100 is equipped with a Data Object Extractor (DOE) 103 the role of which is to handle the data object and/or its metadata to be transferred to the first terminal (mobile phone) 150, once its coordinates have been determined and supplied to it. The DOE 103 consists of a software service running on the second terminal (PC) 100, or part of the OS of the second terminal (PC) 100.

The mobile device is provided with an image processing module 155 and with an application service (AS) 154, the role of which will be explained below. The image processing module 155 acquires from the camera an optical image from the screen of the second terminal (PC) home server 100, which includes the embedded marker and calculates the coordinates of the image at which the user has pointed the camera, and transmits said coordinates to the second terminal (PC) 100. The DOE 103 uses the coordinates transmitted to it by the first terminal (mobile phone) 150 to identify the data object selected by the user and to extract it into a transmissible form. The transmissible form used depends, of course, on that type of data object; for instance, for an image appearing on webpage the original image file is taken. If a text field is selected its content will be taken as a textual data.

The data file or object extracted according to the above is then transmitted to the first terminal (mobile device) 150 via the communication line and is received by the AS, which makes it available to the appropriate mobile application.

As will be apparent to the skilled person, some steps can be performed differently, such as the identification of the coordinates of the object selected by the user on the screen of the second terminal (PC) 100 can be carried out in the second terminal (PC) 100 itself, rather than on the first terminal (mobile device) 150, by providing to it an image acquired by the first terminal (mobile device) 150, which includes sufficient information for this purpose. Alternatively, a combination of mobile and second terminal (PC) 100 image processing may be employed.

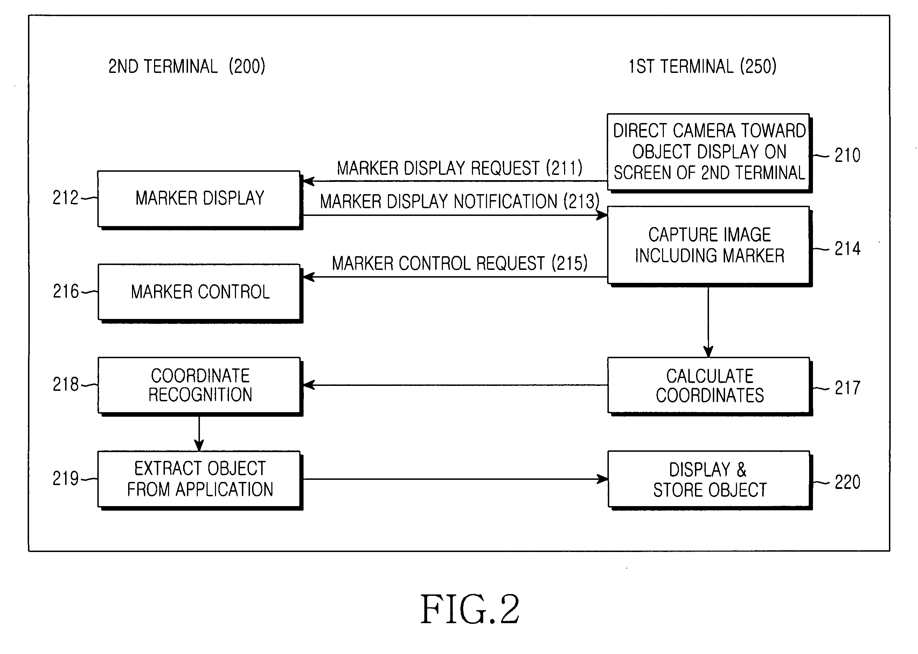

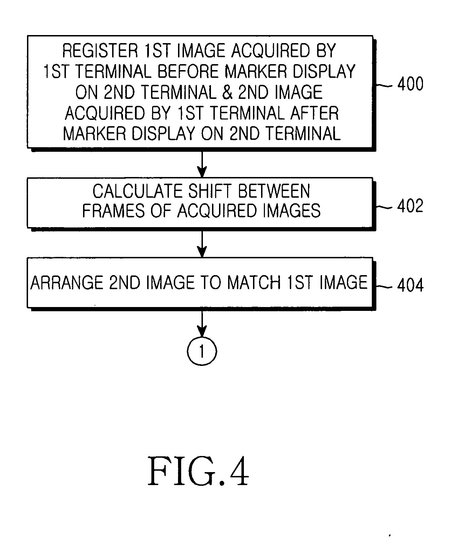

Turning now to Fig. 2, and exemplary sequence of operation of the system of Fig. 1 is schematically illustrated. The sequence involves pointing the camera of a first terminal 250 (and this particular example, a first terminal 250) at an object which is displayed on the screen of the second terminal digital broadcast receiver 200 (step tuner 210). A key in the first terminal 250 is predefined to activate the following steps. In the following steps, the phone takes a picture of the pc screen and then sends a command to the second terminal 200 to display the marker (step 211). The second terminal 200 displays the marker and notifies the phone (step 213). The phone then takes an additional picture, this time containing the marker (step 214). The phone image processing module uses the two pictures to calculate the coordinates (see detailed description in Fig 4-7). Once the coordinates were identified by the phone they are sent to the second terminal 200. The DOE 103 identifies which object is shown on the screen at the coordinates that have been determined and extracts the object from the application, which is then transmitted to the first terminal 250 for further use.

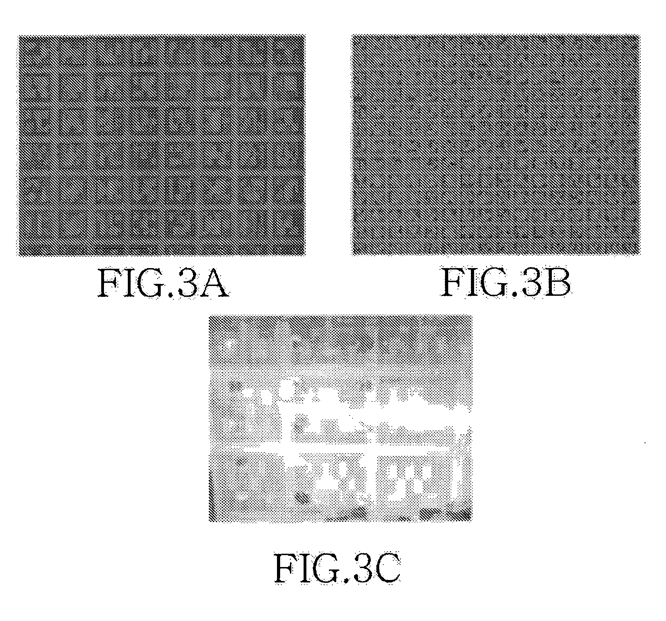

Fig. 3 shows three illustrative different types of markers. Marker A includes black and blue indicia (blue being the light color in the black-and-white figure), marker B includes black and red indicia (red being the light color in the black-and-white figure). Note that by using different sizes of markers (the blue one has bigger elements than the red) image processing will be successful in different distances from the screen of the second terminal. The actual marker which is displayed on the screen of the second terminal will be a mix of red and blue and it will be split again to its red and blue components after it was captured by the phone camera side. Marker C is a blend of a marker with the desktop image captured by the camera. Blending of the marker in the current active desktop makes it less visible and irritating to the viewer. Other methods of making the marker less visible are discussed at [Anselm Grundh" ofer, Manja Seeger, Ferry H" antsch, and Oliver Bimber, Bauhaus-University Weimar, "Dynamic Adaptation of Projected Imperceptible Codes"].

Fig. 4 through 7 illustrate a process according to an embodiment of the invention, for identifying the real, X,Y coordinates of an object on the screen of the second terminal, at which the user of a first terminal has pointed his camera. Fig. 4 illustrates the process of capturing two images using a first terminal. The first image (A) is before the second terminal places the marker on the screen and the second image (B) contains the marker. The screen image (A) acquired by the first terminal before the marker display of the second terminal and the screen image (B) acquired by the first terminal after the marker display of the second terminal are registered, respectively (step 400).

Then, the shift between the two frames (this shift is a result of hand movements) is calculated (step 402), and image B is aligned to match A (step 404). This results in image B'. Subtraction of the two images (A and B) provides an image of the marker without the desktop background (C). Further more, we then get the red component of the image(C(red)) and blue component (C(blue)).

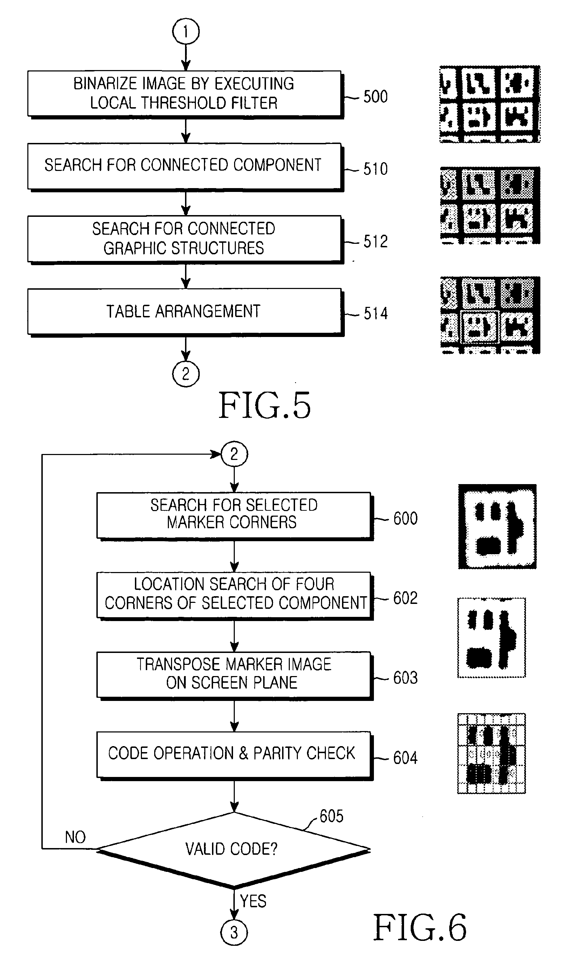

Fig. 5 shows how a specific pattern inside the marker images received is recognized, after the operation of FIG. 4.

First a local threshold filter is run in order to create a binary image. In other words, the image is binarized by running the local threshold filter (step 500).

Then, through searching for an component connected to the image binarized through the operation of step 500 (step 510) and searching for a connected graphic structure (step 512), the connected components are identified. Then, a result of the identification is arranged in a table (step 514), so that the best component is chosen to match the marker pattern characteristics (aspect ratio, size etc.).

In Fig. 6 the pattern's code is read to attempt to determine its authenticity. First, the markers corners are identified through searching of the selected marker corner (step 600). Then, through a location search of four corners of the component selected through step 600 (step 602), the image is transposed to be exactly square and in the size it was originally displayed on screen (step 603). Then, the patterns code is calculated and validated using an error detection/correction algorithm, so as to perform a code operation and a parity check (step 604). If it is not a valid code, the next best fitting pattern is chosen and step 2 is repeated. If the code is valid, the process proceeds.

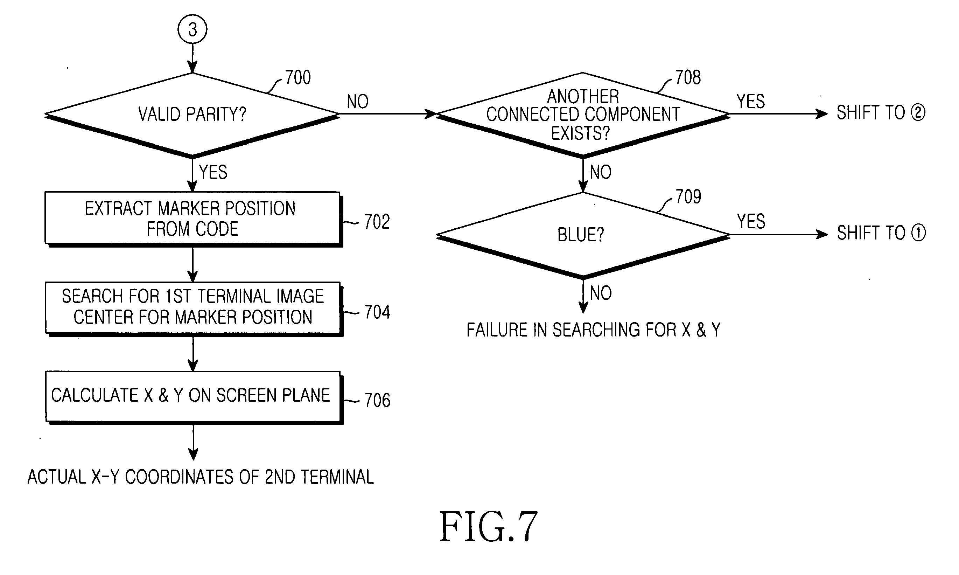

In Fig. 7, the marker's position is extracted according to the code it represents. Then its position relative to the screen center of the first terminal (the point where the user was aiming at) is found and is sent to the second terminal.

Specifically, as a result of the valid parity check in step 700, when it is a valid code, step 702 is performed, in which the marker position is extracted from the code. Then, the image center of the first terminal with respect to the extracted marker position is detected, and X and Y on the screen plane of the second terminal are calculated, so that the actual coordinates of the second terminal are identified (step 706).

Meanwhile, as a result of the valid parity check in step 700, when it is not a valid code, it is checked if there is another connected component (step 708). As a result of the checking, when there is another connected component, the process shifts to stage ②. When another connected component does not exist, it is checked if the image center of the first terminal is blue (step 709). As a result of the checking, when the image center of the first terminal is blue, the process shifts to stage ①. When the image center of the first terminal is not blue, it is concluded that the searching is failure and the process is terminated.

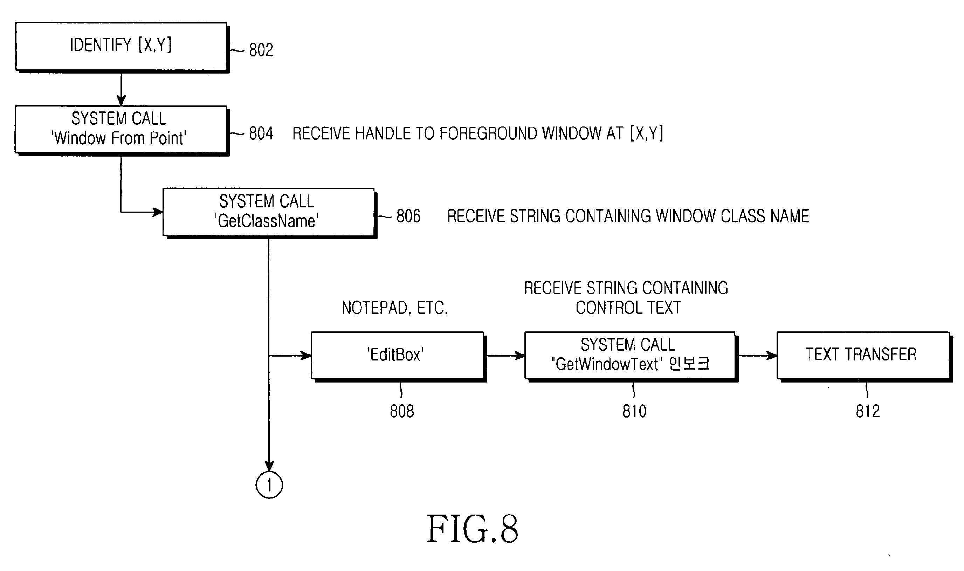

Figs. 8 through 10 illustrate one example of extraction of an object located at the coordinates on the screen of the second terminal that have been calculated by the first terminal when using Windows XP operating system on second terminal 200.

Referring to FIG. 8, [X, Y] coordinates of the object displayed on the screen of the second terminal are identified (step 802), and a handle reception to a foreground window is executed at the [X,Y] coordinates through "Window From Point" system call in step 804. In step 806, through "GetClassName" system call, a string containing a window class name is received. Then, in step 808, the edit box of an application, such as notepad, is checked. Thereafter, in step 810, through "GetWindowText" system call, a string containing a control text is received. Next, in step 812, the text is delivered.

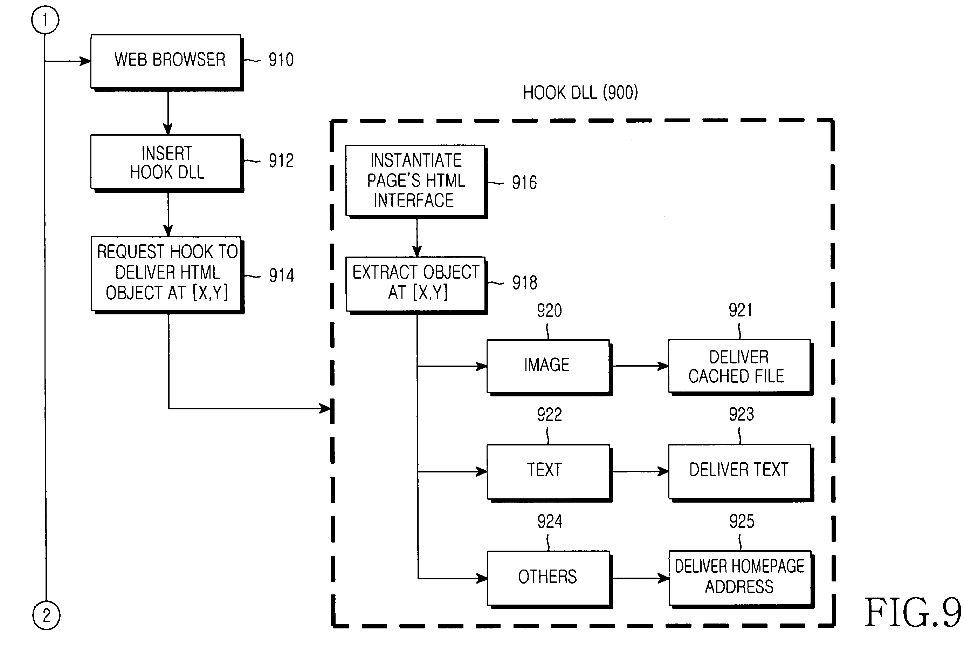

Referring to FIG. 9, after the operation according to the flowchart as shown in FIG. 4, when the generated image is a web browser (step 910), a hook dll is inserted in step 912, and the hook is then requested to deliver an HTML object of [X,Y] in step 914. Then, in the hook DLL 900, the HTML interface of the page is instantiated (step 916), and the object at [X,Y] is extracted (step 918). When the extracted object is an image (step 920), a URO and a cached file are delivered (step 921). When the extracted object is a text (step 922), the text is delivered (step 923). When the extracted object is an object, which is not a file or text (step 924), a web page address is delivered (step 925).

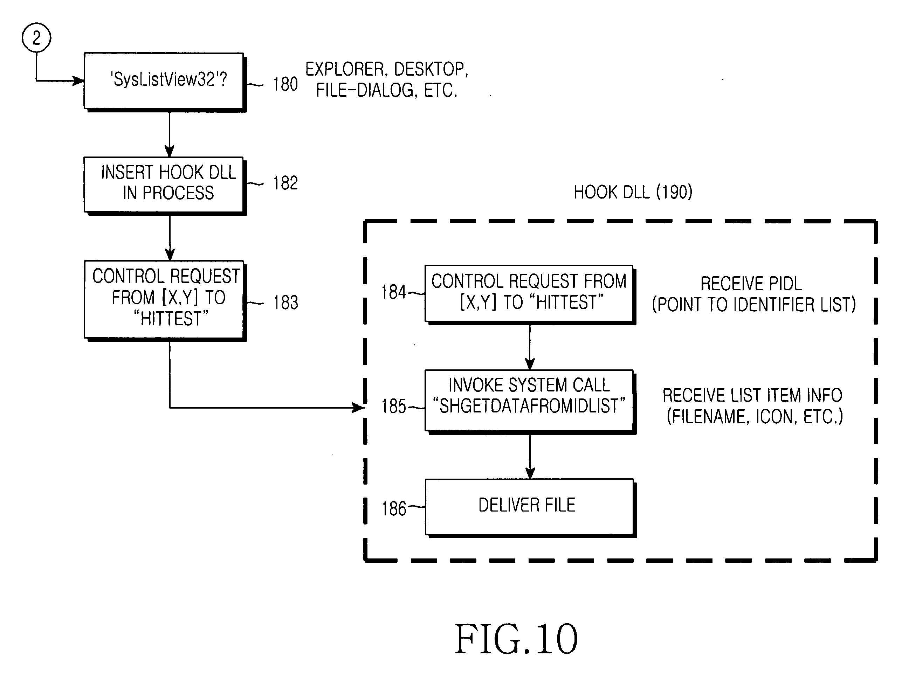

Referring to FIG. 10, after the operation according to the flowchart as shown in FIG. 5, when an optimum component matching with the marker pattern characteristic has been selected, that is, in the case of "SysListView32" corresponding to a shell, such as explorer, desktop, file dialog, etc. (step 180), a hook dll is inserted in the process (step 182), and control is requested to "HitTest" at [X,Y] (step 183). In the hook DLL 190, a Pointer to identifier List (PIDL) is received by requesting control to "HitTest" at [X,Y] in step 184, list item information (filename, icon, etc.) is received by performing "SHGetDataFromIDList" system call in step 185, and the file is then delivered in step 186.

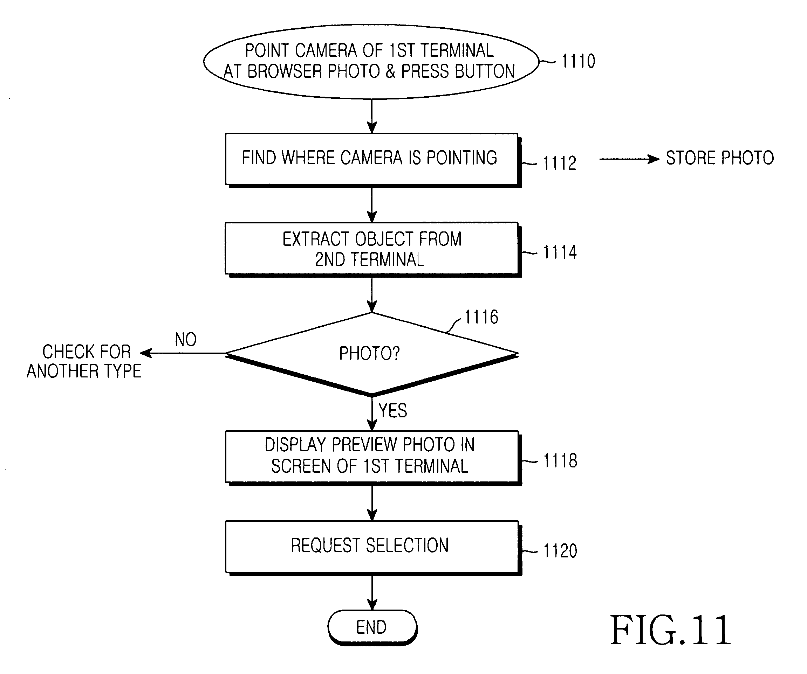

Fig. 11 illustrates the acquisition by a first terminal of a photo found in a browser open on the screen of the second terminal.

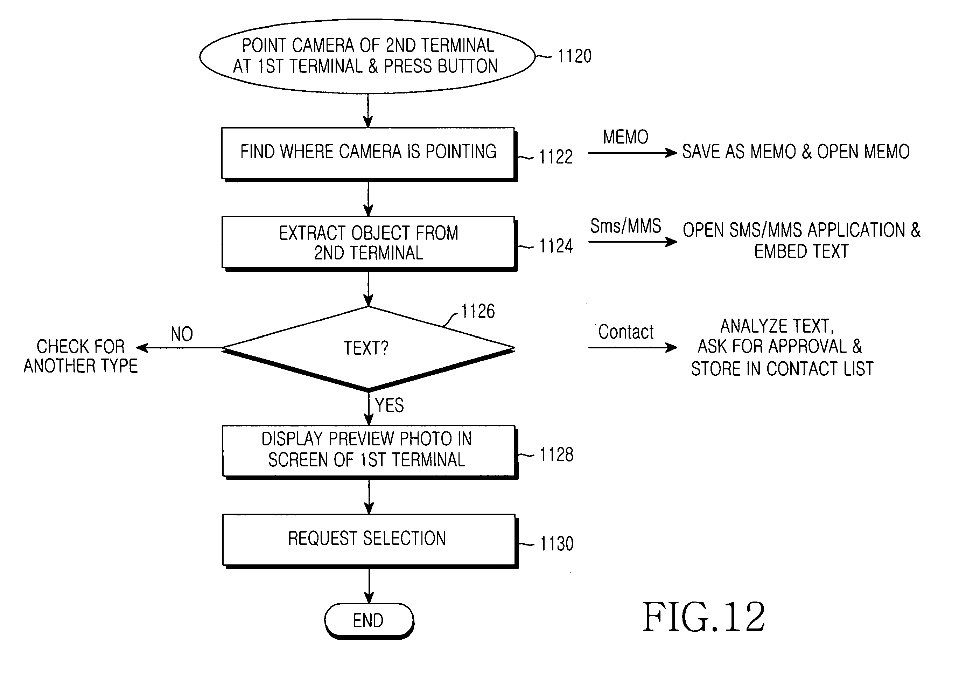

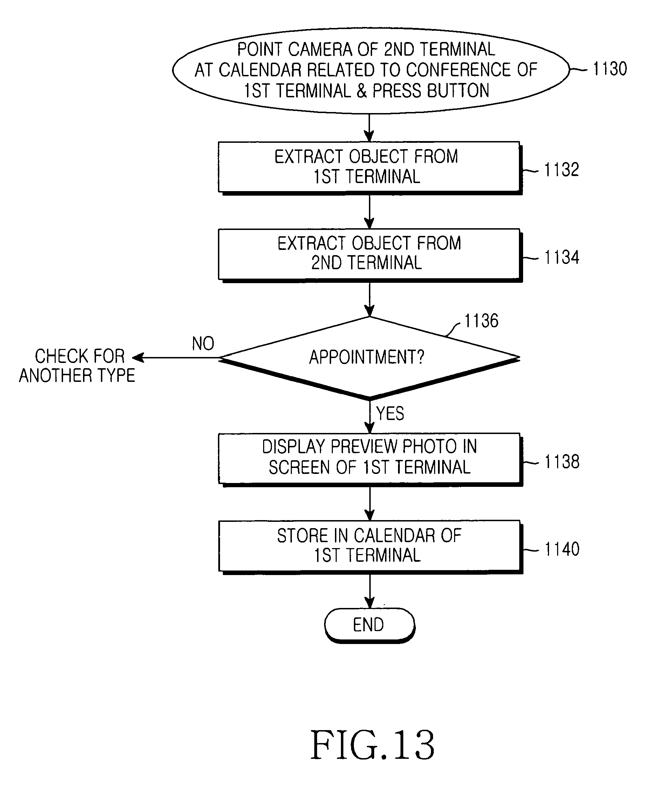

First, when a camera of the first terminal is pointed at a photograph of a browser and a start button of the first terminal is then pressed (step 1110), a predetermined point in the screen of the first terminal at which the camera is pointing is found through searching (step 1112). At this time, the found point and the corresponding photograph are stored in the first terminal (step 1112). Then, the object is extracted from the second terminal in step 1114, and it is checked in step 1116 if the object displayed on the second terminal is a photograph. As a result of the checking, when the object is not a photograph, the process shifts to a corresponding operation (FIG. 12 or FIG. 13). When the object is a photograph, a preview photograph is displayed on the screen of the first terminal in step 1118. Then, in step 1120, an application employed when the displayed photograph is transmitted to the second terminal is selected and the photograph is then transmitted to the second terminal.

Fig. 12 illustrates the acquisition by a first terminal 250 of text from a notepad shown on the screen of the second terminal 200.

First, when the camera of the first terminal is pointed at a photograph of a browser and a start button of the first terminal is then pressed (step 1120), a predetermined point in the screen of the first terminal at which the camera is pointing is found through searching (step 1122).

At this time, the found point and the corresponding memo are stored in the first terminal are opened (step 1123). Then, the object is extracted from the second terminal in step 1124, which is performed through the operation of opening the SMS/MMS application and inserting a text in the application in step 1131. Then, it is checked in step 1126 if the object displayed on the second terminal is a text. As a result of the checking, when the object is not a text, the process shifts to a corresponding operation (FIG. 12 or FIG. 13). When the object is a text, a preview text is displayed on the screen of the first terminal in step 1128. Thereafter, the text is analyzed in the first terminal in step 1132, and is then stored in the approval request and contact list.

In step 1130, an application employed when the displayed text is transmitted to the second terminal is selected and the text is then transmitted to the second terminal.

Fig. 13 illustrates the acquisition by a first terminal of calendar data relating to a meeting which is shown in a calendar display on the screen of the second terminal.

First, when the camera of the first terminal is pointed at calendar data relating to a meeting displayed on the second terminal and a start button of the first terminal is then pressed (step 1130), a predetermined point in the screen of the first terminal at which the camera is pointing is found through searching (step 1132).

Then, in step 1134, the object is extracted from the second terminal.

In step 1136, it is checked if the object displayed on the second terminal is an appointment. As a result of the checking, when the object is not an appointment, the process shifts to a corresponding operation (FIG. 12 or FIG. 13). When the object is an appointment, a preview text is displayed on the screen of the first terminal in step 1138.

Then, in step 1140, an application employed when the displayed calendar data is transmitted to the second terminal is selected and the text is then transmitted to the second terminal.

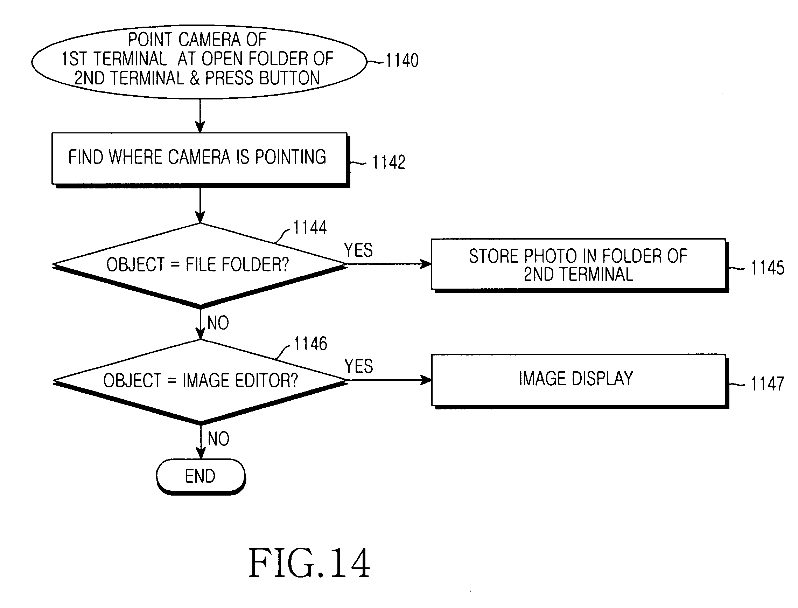

Fig. 14 illustrates the pushing of a photo by a first terminal to the second terminal data storage or to a second terminal viewer application. The user first chooses on the mobile side the object (in the example, a picture) that he wants to push to the computer. He then points the device to the location on the screen of the second terminal to which he wishes to push the object. It can be an open folder or an open viewer application which supports the file type that was selected for pushing (merely as an example, Fig. 14 makes reference to an open folder). Then the user presses the first terminal "action" button and the push process begins. In step 1140, the first terminal and second terminal "identify" where the phone was aiming to. Then, the second terminal understands which object is currently presented on the screen at that point. If it's an open folder it will copy the file to this folder and if it's a viewing application it will copy the file to a temporary directory and open it inside the application.

That is to say, in step 1142, a predetermined point in the screen of the first terminal at which the camera of the first terminal is pointing is found through searching. In step 1144, it is checked if the object is identical to the file folder. As a result of the checking, when the object is identical to the file folder, the object is stored in the folder of the second terminal in step 1145. When the object is not identical to the file folder, it is checked in step 1146 if the object is identical to an image editor. When the object is identical to an image editor, the image is displayed (step 1147). When the object is not identical to an image editor, the process is ended.

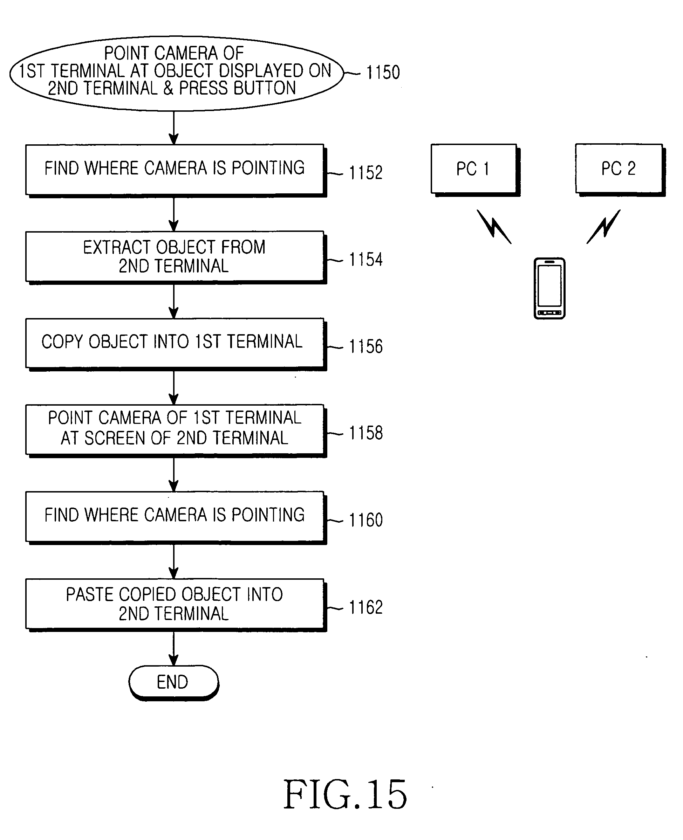

Fig. 15 illustrates another embodiment of the invention in which the first terminal is used as a bridge between two separate PCs. In this mode, and as clearly shown in the figure, the first terminal first acquires an object from second terminal 1, and then pushes it to second terminal 2. In this way, the first terminal becomes a data transfer apparatus between different second terminals ("Universal clipboard").

More specifically, referring to FIG. 15, the camera of the first terminal is first pointed at the second terminal in step 1150, and a predetermined point in the screen of the second terminal at which the camera is pointing is found through searching (step 1152).

Then, the object is extracted from the second terminal in step 1154, and the extracted object is copied into the first terminal in step 1156. Then, the camera of the first terminal is pointed at the screen of the second terminal in step 1158, and a predetermined point at which the camera is pointing is found through searching (step 1160). Thereafter, in step 1162, the object copied in step 1156 is pasted into the second terminal.

In an alternative embodiment of the invention the identification process of an object on the screen of the second terminal, which is to be transferred to a first terminal, (or a location on the screen of the second terminal to which an object is to be pushed) is identified by using a pointing device and directly pointing at the desired object or location. Any suitable pointing device can be used, such as a mouse or a finger, if a touch screen is used, with or without the additional use of a keyboard key, a mouse button click or other input device. As will be appreciated by the skilled person, using a pointing device simplifies the location and identification process and, therefore, may be desirable in some instances.

The following additional examples will further illustrate the invention.

### Example 1

### Taking a picture from internet explorer to phone.

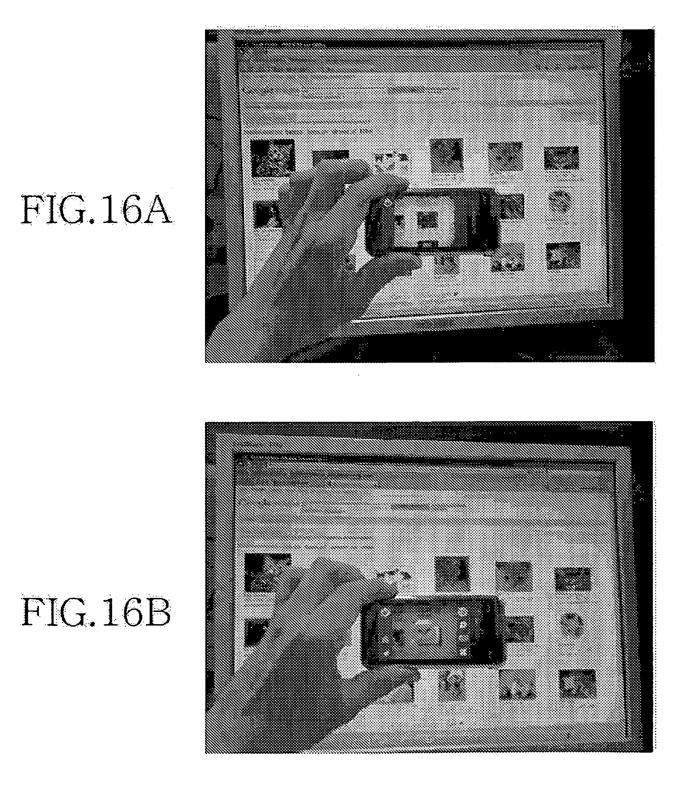

The following describes in detail the process of transferring a picture shown on the screen of the second terminal in Internet Explorer to the phone, with reference to Fig. 16 (A. and B). First of all the user activates the application. He sees a preview of the phones camera capture including a crosshair in the screen center. When the crosshair is aimed on the picture to be transferred (Fig. 16A).

He presses the phone's action button. The process described in Figs. 2-8 starts and yields the coordination of the crosshair on the screen of the second terminal. The coordination is sent to the second terminal where the data object extraction process starts (described in Figs. 8-10). First the 'WindowFromPoint' system call is invoked which returns a handle to the internet explorer window. Then the 'GetClassName' system call is invoked using this handle to get a string describing the window's class name (Internet Explorer_Server in this example). The software injects a hook dll to the process and then sends a request to that hook to deliver the HTML object at the location found by the phone. The hook dll extracts the object in this position (a picture in this example) and returns a picture URL and the cached image file. The file is then sent to the phone side and invokes the user interface to allow various operations on the picture (Fig. 16B) such as sending as MMS, opening in the default phone browser, etc.

### Example 2

### Taking a selected text out of notepad to phone.

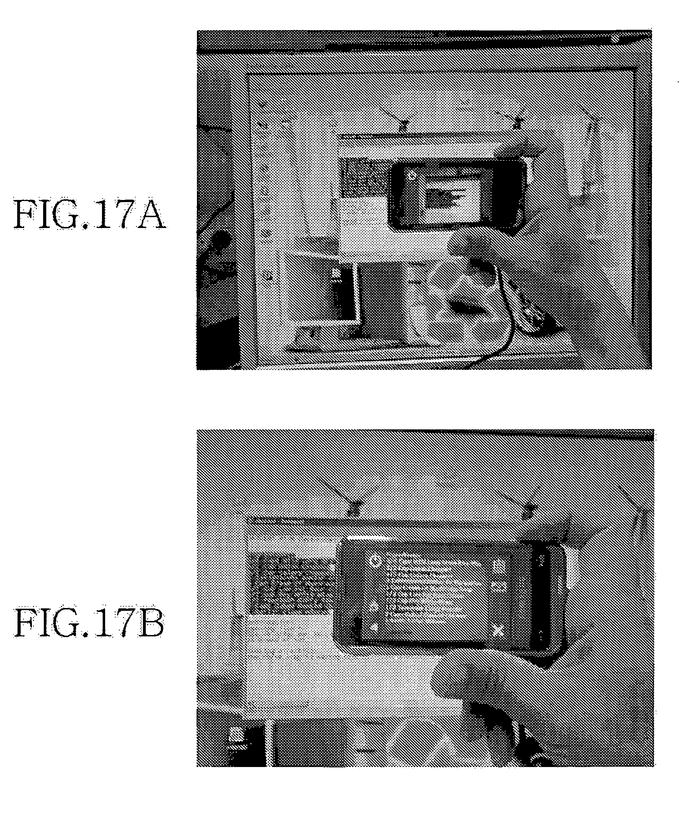

The following describes in detail the process of transferring selected text in the notepad application, with reference to Fig. 17 (A and B). First of all the user opens a notepad document in which he selects a specific text he wants to transfer. Then, the user activates the application. He sees a preview of the phone camera capture including a crosshair in the screen center. When the crosshair is aimed at the notepad application (Fig. 17A) he presses the phone's action button. The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the notepad window. Then the GetClassName' system call is invoked using this handle to get a string describing the window's class name ('EditBox' in this example). The software invokes the 'GetWindowText' system call and gets the selected text. A text file is created from the received text and the file is then sent to the phone side. The phone software receives the file and invokes the appropriate user interface to allow various operations on the text (Fig. 17B) such as send as SMS, open in Notes application etc.

### Example 3

### Transferring a music file (mp3) from Windows file Explorer to a cellular phone

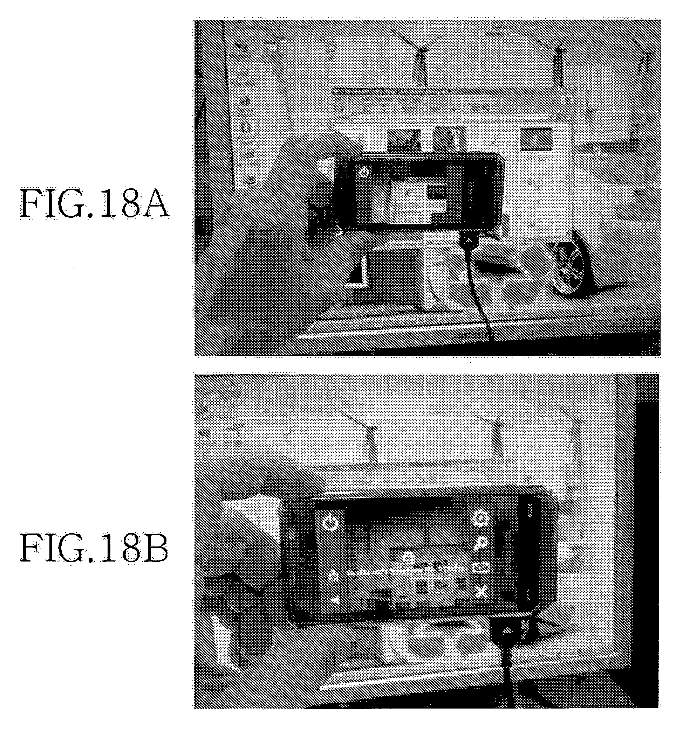

The following describes in detail the process of transferring an mp3 music file from Windows file Explorer. First of all the user opens directory containing the mp3 file in File Explorer. Then, the user activates the application. He sees a preview of the phone camera capture including a crosshair in the screen center. When the crosshair is aimed at the desired music file (Fig. 18A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the file explorer window. Then the 'GetClassName' system call is invoked using this handle to get a string describing the window's class name ('SysListView32' in our case). The software injects a hook dll to the process and then sends a request to that hook to deliver shell object at location found by the phone. The hook dll extract the PIDL (pointer to identifier list) in this position and invokes the 'SHGetDataFromDList' system call to get the item information on the file (filename, icon etc). The information is used to locate the file and to send it to the phone. The phone software receives the file and invokes the appropriate user interface to allow various operations on the file (Fig. 18B) such as opening in the default browser etc.

### Example 4

### Transferring a picture from a first terminal to a second terminal File Explorer

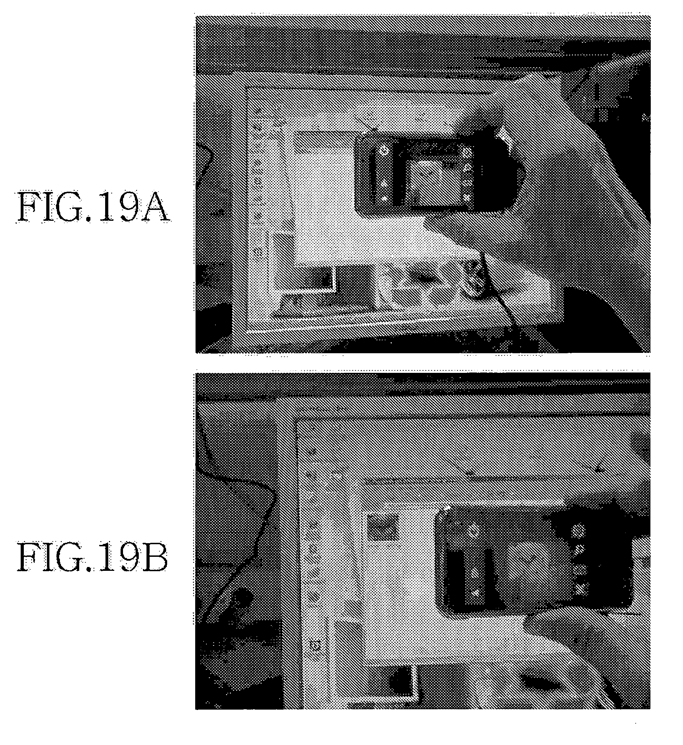

The following describes in detail the process of transferring a picture from the a first terminal to Windows file Explorer. First of all the user uses the phone application to select an image to be transferred. Then, the user activates the push operation from the software's GUI. He sees a preview of the phones camera capture including a crosshair in the screen center. When the crosshair is aimed at the desired second terminal file explorer window (Fig. 19A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the File Explorer window. Then the 'GetClassName' system call is invoked using this handle to get a string describing the window's class name ('SysListView32' in our case). It then sends a response to the phone telling whether the object which had been identified (a folder in our case) is an eligible target to support the "push" operation according to the pushed object type (an image file in this example).

The phone then sends the picture file from the phone to the second terminal software (Fig. 19B). The second terminal software writes the file to the system temporary files folder and moving it to the target location, determined by using the 'GetWindowText' system call which indicates the folder path (except in cases of special folders such 'Desktop', 'My Documents' etc which are handled using 'SHGetSpecialFolderPath' system call.

### Example 4

### Transferring a picture from a phone to a second terminal as an attachment of an Outlook outgoing email message

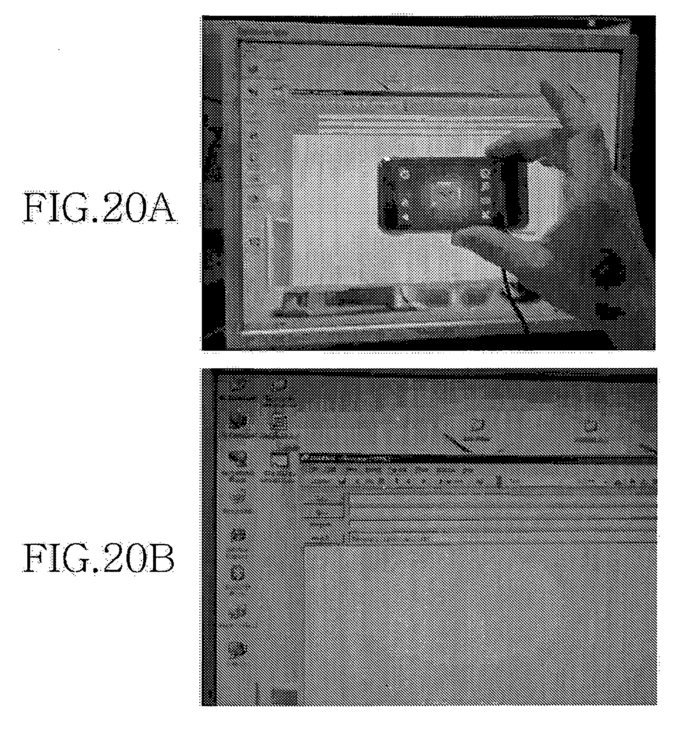

The following describes in detail the process of transferring a picture from the phone to an attachment of an Outlook outgoing email message. First of all the user opens a new or existing outgoing Outlook email message. The user then uses the phone software to select an image to be transferred. Then, the user activates the push operation from the software's GUI. He sees a preview of the phones camera capture including a crosshair in the screen center. When the crosshair is aimed on the opened outlook message window in the second terminal (Fig. 20A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to a component in Outlook new message dialog. Then the 'GetClassName' system call is invoked using this handle to get a string describing the component's class name. The string is then compared to a list of possible values related to Outlook new message dialog (which is different for different versions and different view-types). A process of getting the previous component parent handle and retrieving its class name is initiated until there is a match or until a 'parentless' handle is obtained. If a match is found, the mobile is notified and the object is sent to the second terminal. Then, using COM objects, an object representing the Outlook application is generated to access the new message dialog "message components"(subject, body etc), and the file path of the object which had been sent is added to the message attachments (Fig. 20B).

### Example 5

### Direct installation of a phone software in a first terminal from a web application store

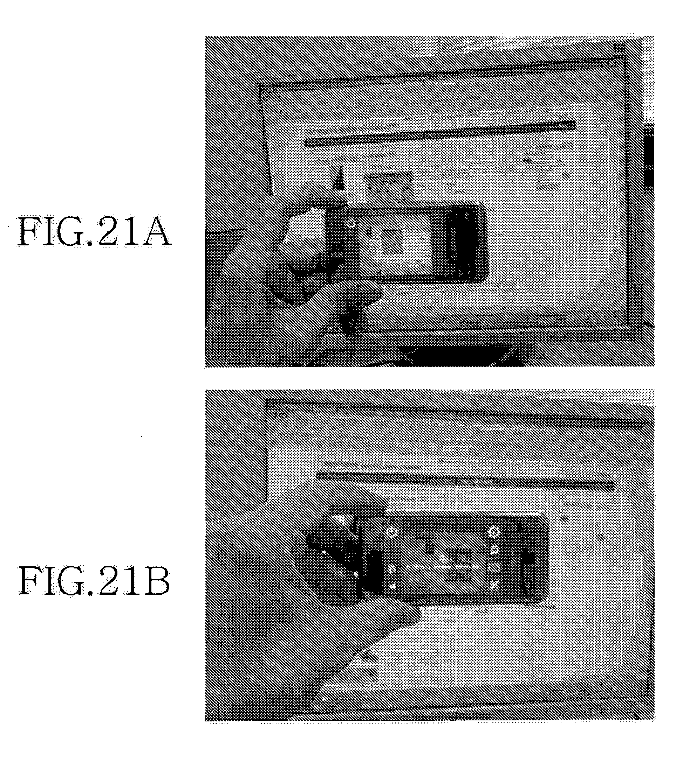

The following describes in detail the process of installing a phone software just by pointing and clicking on its web page or icon in a web application store. First of all the user opens a web browser and goes to an application store. Then, the user activates the application. He sees a preview of the phones camera capture including a crosshair in the screen center. When the crosshair is aimed at the desired application (which can be a screenshot or text describing it - Fig. 21A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the Internet Explorer window. Then the 'GetClassName' system call is invoked using this handle to get a string describing the window's class name (Internet Explorer_Server in this example). The software injects a hook dll to the process and then sends a request to that hook to deliver an HTML object at location found by the phone. The hook dll extracts the object in this position (a picture in this example) and returns a picture URL. The data object extractor identifies that the image object contains an HTML URL reference (e.g. <img src="TennisGame.jpg"href=http://uk.samsungmobile.com/games/TennisGame.ja d />) to an application installation file, and uses the URL data to download the installation file from the web. The file is then sent to the phone. The phone software receives the file and invokes the appropriate user interface to allow the installation (among various operations) to take place (Fig. 21B).

As will be apparent to the skilled person, the invention allows performing many activities that were not visibly carried out by conventional methods known in the art. An illustrative list of uses of the invention, provided for illustration only and not intended to limit such uses in any way, is as follows:
1. second terminal to phone - file transfer
   a. Transfer of photos from second terminal -> Phone (as wallpaper)
   b. Files
2. Outlook:
   a. Contact Sync (specific or all)
   b. Calendar Sync (specific or today)
   c. Point at mail folder ask to bring all, unread, today etc
3. Phone to phone -Transfer data between phones
4. Video (second terminal->phone): pointing on flash video player
   a. Send URL to phone
   b. Convert stream to file and send to phone
   c. Stream to phone from second terminal (local, over cell phone network)
5. Text (notepad, word)
   a. Easy and fast to write SMS
   b. Text- > contacts
   c. Write address in plain text - > Mobile Navigation Application
6. Transfer of files second terminal->(mobile)>second terminal examples:
   a. Office<->home (students)
   b. School<->home
   c. Work computer<->presentation computer
7. Point at maps and send coordination to navigation application on the first terminal. Easy to setup destination
8. Music server Point at a song
   a. Copy play list (private or public place -cafe) and enable to buy
   b. Upload songs to internet server
   c. Instead of direct copy second terminal will stream selected song to mobile
9. Application store - point at an application and install in phone (one click)
10. In selected search engine point the phone on preview image and bring the original image
11. Backup my SMSs
12. Point the phone at news and receive updates from the same feed or subject (e.g. gossip)
13. Non-second terminal
   a. Fastfood - point the phone on the teller screen to pass information about my phone number when the food is ready receive SMS
   b. Bulleting board - copy/post the ads to the first terminal
14. Business card exchange between one first terminal to the other.

All the above description has been given for the purpose of illustration and is not meant to limit the invention in any way, except as defined in the claims to follow.

## Claims

1. A data transfer method, comprising the steps of:
identifying an object displayed on a screen of a second terminal (100) by using a camera of a first terminal (150), to which data is to be transmitted;
determining (217) coordinates of the object identified by the first terminal (150); and
transmitting the object displayed on the screen of the second terminal (100) and/or its metadata to the first terminal (150);
wherein the coordinates of the object are determined based on an area on the screen having one or more markers, each marker comprising a preset pattern representing the position of each marker; and **characterised in that** the markers are identified by capturing, by the camera, a first image before the markers are placed on the screen, capturing, by the camera, a second image containing the markers, and subtracting the first image from the second image.

2. A data transfer method according to claim 1, further comprising performing an operation associated with the object received from the second terminal (100).

3. A data transfer method according to claim 1, wherein the object is selected from data objects, executable objects, file folders and/or their metadata.

4. A data transfer method according to claim 1, wherein, in determining the coordinates of the object, the displayed object is identified based on an area having a particular pattern preset on the screen.

5. A data transfer method according to claim 1, wherein the object and its coordinates are identified using a pointing device associated with a screen.

6. A data transfer method according to claim 1, wherein the object and its coordinates are identified using a combination of optical apparatus and pointing device.

7. A data transfer method according to claim 1, wherein the object includes data or data combination.

8. A data transfer method according to claim 1, wherein the object is an image, a text, or a media file.

9. A data transfer method according to claim 1, wherein the object is associated with a software installation process.

10. A data transfer method according to claim 1, wherein the identifying of an object comprises the steps of:
previewing the object displayed on the screen of the second terminal (100) by using the camera of the first terminal (150), to which data is to be transmitted;
determining the coordinates of the object previewed by the first terminal (150); and
transmitting the object corresponding to the determined coordinates to the first terminal (150).

11. A data transfer method according to claim 10, wherein transmitting of the object comprises creating a transmissible data object in the second terminal (100) and transmitting the data object to the first terminal (150).

12. A data transfer method according to claim 10, wherein determining the coordinates is performed by processing an image of the screen, which has been acquired by the camera of the mobile device.

13. A data transfer method according to claim 10, wherein the object displayed on the screen of the second terminal (100) is representative of a storage area of the second terminal (100) or associated with the second terminal (100), to which data object existing on the first terminal (150) is to be copied or transferred.

14. A data transfer system, comprising:
a data object extractor (103) to identify and extract displayed data objects based on an area having a particular pattern preset on a screen of a terminal capable of transmitting and receiving data;
an image processor (155) to process images of the screen of the terminal capable of transmitting and receiving data, and to extract location information for objects displayed based on an area having a particular pattern preset on the screen; and
an application service (154) processor to receive data objects transmitted over a communication line and to embed the received data objects in the operation of a receiving terminal,
wherein the terminal capable of transmitting and receiving data is adapted to transmit or receive data objects to or from another terminal capable of transmitting and receiving data over a communication line, and **characterised in that** the image processor is adapted to identify the area having the particular pattern preset on the screen by capturing, by a camera, a first image of the screen before the area having the particular pattern is preset on the screen, capturing, by the camera, a second image containing the area having the particular pattern preset on the screen, and subtracting the first image from the second image.

15. A data transfer system according to claim 14, wherein the communication line is selected from one or more of Bluetooth, WiFi, USB cable and cellular network.

## Patentansprüche

1. Datenübertragungsverfahren, das die folgenden Schritte beinhaltet:
Identifizieren eines auf einem Bildschirm eines zweiten Endgeräts (100) angezeigten Objekts mittels einer Kamera eines ersten Endgeräts (150), zu dem Daten übertragen werden sollen;
Ermitteln (217) von Koordinaten des von dem ersten Endgerät (150) identifizierten Objekts; und
Übertragen des auf dem Bildschirm des zweiten Endgeräts (100) angezeigten Objekts und/oder seiner Metadaten zum ersten Endgerät (150);
wobei die Koordinaten des Objekts auf der Basis eines Bildschirmbereichs mit einer oder mehreren Markierungen ermittelt werden, wobei jede Markierung ein voreingestelltes Muster beinhaltet, das die Position jeder Markierung repräsentiert; und **dadurch gekennzeichnet, dass** die Markierungen durch Erfassen eines ersten Bildes mit der Kamera, bevor die Markierungen auf den Bildschirm gesetzt werden, Erfassen eines zweiten die Markierungen enthaltenden Bildes mit der Kamera und Subtrahieren des ersten Bildes vom zweiten Bild identifiziert werden.

2. Datenübertragungsverfahren nach Anspruch 1, das ferner das Ausführen eines Vorgangs beinhaltet, der mit dem vom zweiten Endgerät (100) empfangenen Objekt assoziiert ist.

3. Datenübertragungsverfahren nach Anspruch 1, wobei das Objekt aus Datenobjekten, ausführbaren Objekten, Dateiordnern und/oder deren Metadaten ausgewählt wird.

4. Datenübertragungsverfahren nach Anspruch 1, wobei beim Ermitteln der Koordinaten des Objekts das angezeigte Objekt auf der Basis eines Bereichs mit einem auf dem Bildschirm voreingestellten bestimmten Muster identifiziert wird.

5. Datenübertragungsverfahren nach Anspruch 1, wobei das Objekt und seine Koordinaten mit einer mit einem Bildschirm assoziierten Zeigevorrichtung identifiziert werden.

6. Datenübertragungsverfahren nach Anspruch 1, wobei das Objekt und seine Koordinaten anhand einer Kombination aus optischem Gerät und Zeigevorrichtung identifiziert werden.

7. Datenübertragungsverfahren nach Anspruch 1, wobei das Objekt Daten oder eine Datenkombination beinhaltet.

8. Datenübertragungsverfahren nach Anspruch 1, wobei das Objekt ein Bild, ein Text oder eine Mediendatei ist.

9. Datenübertragungsverfahren nach Anspruch 1, wobei das Objekt mit einem Software-Installationsprozess assoziiert ist.

10. Datenübertragungsverfahren nach Anspruch 1, wobei das Identifizieren eines Objekts die folgenden Schritte beinhaltet:
Voranschauen des auf dem Bildschirm des zweiten Endgeräts (100) angezeigten Objekts mit Hilfe der Kamera des ersten Endgeräts (150), zu dem Daten übertragen werden sollen;
Ermitteln der Koordinaten des mit dem ersten Endgerät (150) vorangeschauten Objekts; und
Übertragen des den ermittelten Koordinaten entsprechenden Objekts zu dem ersten Endgerät (150).

11. Datenübertragungsverfahren nach Anspruch 10, wobei das Übertragen des Objekts das Erzeugen eines übertragungsfähigen Datenobjekts im zweiten Endgerät (100) und das Übertragen des Datenobjekts zum ersten Endgerät (150) beinhaltet.

12. Datenübertragungsverfahren nach Anspruch 10, wobei das Ermitteln der Koordinaten durch Verarbeiten eines Bildes des Bildschirms erfolgt, das mit der Kamera des mobilen Geräts erfasst wurde.

13. Datenübertragungsverfahren nach Anspruch 10, wobei das auf dem Bildschirm des zweiten Endgeräts (100) angezeigte Objekt für einen Speicherbereich des zweiten Endgeräts (100) repräsentativ oder mit dem zweiten Endgerät (100) assoziiert ist, zu dem auf dem ersten Endgerät (150) existierende Datenobjekte kopiert oder übertragen werden sollen.

14. Datenübertragungssystem, das Folgendes umfasst:
einen Datenobjekt-Extraktor (103) zum Identifizieren und Extrahieren von angezeigten Datenobjekten auf der Basis eines Bereichs mit einem bestimmten Muster, das auf einem Bildschirm eines Endgeräts voreingestellt ist, das Daten übertragen und empfangen kann;
einen Bildprozessor (155) zum Verarbeiten von Bildern des Bildschirms des Endgeräts, das Daten übertragen und empfangen kann, und zum Extrahieren von Ortsinformationen für auf einem Bereich angezeigte Objekte mit einem auf dem Bildschirm voreingestellten bestimmten Muster; und
einen Anwendungsdiensteprozessor (154) zum Empfangen von Datenobjekten, die über eine Kommunikationsleitung übertragen wurden, und zum Einbetten der empfangenen Datenobjekte in den Betrieb eines Empfangsendgerätes,
wobei das Endgerät, das Daten übertragen und empfangen kann, so ausgelegt ist, dass es Datenobjekte zu oder von einem anderen Endgerät übertragen und empfangen kann, das Daten über eine Kommunikationsleitung übertragen und empfangen kann, und **dadurch gekennzeichnet, dass** der Bildprozessor so ausgelegt ist, dass er den Bereich mit dem auf dem Bildschirm voreingestellten bestimmten Muster durch Erfassen eines ersten Bildes des Bildschirms mit einer Kamera, bevor der Bereich mit dem bestimmten Muster auf dem Bildschirm voreingestellt wird, Erfassen eines zweiten Bildes mit der Kamera, das den Bereich mit dem auf dem Bildschirm voreingestellten bestimmten Muster enthält, und Subtrahieren des ersten Bildes vom zweiten Bild identifiziert.

15. Datenübertragungssystem nach Anspruch 14, wobei die Kommunikationsleitung aus einem oder mehreren aus Bluetooth, WiFi, USB-Kabel und Funknetz ausgewählt ist.

## Revendications

1. Procédé de transfert de données comprenant les étapes consistant à :
identifier un objet affiché sur un écran d'un second terminal (100) grâce à l'utilisation d'une caméra d'un premier terminal (150) auquel des données sont destinées à être transmises ;
déterminer (217) les coordonnées de l'objet ayant été identifié par le premier terminal (150) ; et
transmettre l'objet affiché sur l'écran du second terminal (100) et/ou ses métadonnées vers le premier terminal (150) ;
cas dans lequel les coordonnées de l'objet sont déterminées sur la base d'une zone sur l'écran possédant un ou plusieurs marqueurs, chaque marqueur comportant un modèle prédéfini lequel représente la position de chaque marqueur ; et **caractérisé en ce que** les marqueurs sont identifiés grâce à la saisie, par la caméra, d'une première image avant que les marqueurs ne soient placés sur l'écran, grâce à la saisie, par la caméra, d'une seconde image laquelle contient les marqueurs, et grâce à la soustraction de la première image depuis la seconde image.

2. Procédé de transfert de données selon la revendication 1, comprenant en outre la réalisation d'une opération qui est associée à l'objet reçu à partir du second terminal (100).

3. Procédé de transfert de données selon la revendication 1, l'objet étant sélectionné parmi des objets-données, des objets exécutables, des dossiers de fichiers et/ou leurs métadonnées.

4. Procédé de transfert de données selon la revendication 1, lors de la détermination des coordonnées de l'objet, l'objet affiché étant identifié sur la base d'une zone possédant un modèle particulier lequel est prédéfini sur l'écran.

5. Procédé de transfert de données selon la revendication 1, l'objet et ses coordonnées étant identifiés grâce à l'utilisation d'un dispositif pointeur qui est associé à un écran.

6. Procédé de transfert de données selon la revendication 1, l'objet et ses coordonnées étant identifiés grâce à l'utilisation d'une combinaison composée d'un appareil optique et d'un dispositif pointeur.

7. Procédé de transfert de données selon la revendication 1, l'objet englobant des données ou une combinaison de données.

8. Procédé de transfert de données selon la revendication 1, l'objet étant une image, un texte ou un fichier de médias.

9. Procédé de transfert de données selon la revendication 1, l'objet étant associé à un processus d'installation de logiciel.

10. Procédé de transfert de données selon la revendication 1, l'identification d'un objet comprenant les étapes consistant à :
prévisualiser l'objet affiché sur l'écran du second terminal (100) grâce à l'utilisation de la caméra du premier terminal (150) vers lequel des données sont destinées à être transmises ;
déterminer les coordonnées de l'objet prévisualisé par le premier terminal (150) ; et
transmettre l'objet correspondant aux coordonnées ayant été déterminées vers le premier terminal (150).

11. Procédé de transfert de données selon la revendication 10, la transmission de l'objet comprenant la création d'un objet-données transmissible dans le second terminal (100) et la transmission de l'objet-données vers le premier terminal (150).

12. Procédé de transfert de données selon la revendication 10, la détermination des coordonnées étant réalisée grâce au traitement d'une image de l'écran, laquelle a été acquise par la caméra du dispositif mobile.

13. Procédé de transfert de données selon la revendication 10, l'objet affiché sur l'écran du second terminal (100) étant représentatif d'une zone de stockage du second terminal (100), ou associé au second terminal (100), vers lequel des objets-données existant sur le premier terminal (150) sont destinés à être copiés ou transférés.

14. Système de transfert de données comprenant :
un extracteur d'objets-données (103) pour identifier et extraire des objets-données affichés, sur la base du fait qu'une zone possède un modèle particulier prédéfini sur un écran d'un terminal lequel est apte à transmettre et à recevoir des données ;
un processeur d'images (155) pour traiter des images sur l'écran du terminal apte à transmettre et à recevoir des données, et pour extraire des informations de localisation pour des objets affichés, sur la base du fait qu'une zone possède un modèle particulier prédéfini sur l'écran ; et
un processeur de service d'application (154) pour recevoir des objets-données transmis par le biais d'une ligne de communication et pour incorporer les objets-données reçus au fonctionnement d'un terminal récepteur,
cas dans lequel le terminal apte à transmettre et à recevoir des données est conçu pour transmettre ou recevoir des objets-données vers un autre terminal apte à transmettre et à recevoir des données, ou à partir de celui-ci, par le biais d'une ligne de communication, et **caractérisé en ce que** le processeur d'images est conçu pour identifier la zone possédant le modèle particulier prédéfini sur l'écran grâce à la saisie, par une caméra, d'une première image de l'écran avant que la zone possédant le modèle particulier ne soit prédéfini sur l'écran, grâce à la saisie, par la caméra, d'une seconde image contenant la zone possédant le modèle particulier préfini sur l'écran, et grâce à la soustraction de la première image depuis la seconde image.

15. Système de transfert de données selon la revendication 14, la ligne de communication étant sélectionnée parmi un ou plusieurs des moyens suivants, à savoir Bluetooth, WiFi, câble USB et réseau cellulaire.
